# EUROPEAN PATENT APPLICATION

(11) **EP 4 552 929 A1**
(43) Date of publication of application: **14.05.2025**
(21) Application number: 24210778.7
(22) Date of filing: 05.11.2024
(51) Int. Cl.: B60R 16/03, G08C 15/08, G08C 15/12, G08C 13/00, H04L 12/40

(54) **MANAGEMENT DEVICE, CONTROL PROGRAM, AND CONTROL METHOD**

(30) Priority: 13.11.2023 JP 2023193076
(71) Applicant: TOYOTA JIDOSHA KABUSHIKI KAISHA, Aichi-ken, 471-8571 (JP)
(72) Inventor: TOMIDA, Shingo, Toyota-shi, 471-8571 (JP); TAKAISHI, Daisuke, Toyota-shi, 471-8571 (JP); SUGIYAMA, Kazuya, Toyota-shi, 471-8571 (JP); ANDOU, Hiroya, Toyota-shi, 471-8571 (JP)
(74) Representative: J A Kemp LLP

(57) **Abstract**

A management device for a vehicle on-board network system includes processing circuitry. The processing circuitry obtains, subsequent to modifications made to the vehicle on-board network system, information related to a target device that operated during execution of a predetermined function in the vehicle on-board network system, the target device being one of devices that are connected to the vehicle on-board network system. Based on the information, the processing circuitry selects a startup method for the target device from a first startup method for starting the target device through power control that controls whether to supply power to the target device and a second startup method for starting the target device by communicating with the target device to request startup for the target device. The processing circuitry is configured to start the target device using the selected startup method.

## Description

### BACKGROUND

### 1. Field

This disclosure relates to a management device, a control program , and a control method.

### 2. Description of Related Art

Japanese Laid-Open Patent Publication No. 2017-33321 discloses a power supply control system. This power control system includes a management device and a target device that is started by the management device. The management device starts the target device through power control.

Japanese Laid-Open Patent Publication No. 2021-11228 discloses a vehicle on-board network system. In this vehicle on-board network system, the management device communicates with the target device to request its startup, thereby starting the target device.

It is proposed to use the above-described two startup methods selectively. In a case in which modifications have been made to the vehicle on-board network system (e.g., adding a target device), the same startup method as the one that was employed prior to the modifications may not necessarily be optimal for the vehicle on-board network system.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A management device according to an embodiment of the present disclosure is a management device for a vehicle on-board network system. The management device includes processing circuitry. The processing circuitry obtains, subsequent to modifications made to the vehicle on-board network system, information related to a target device that operated during execution of a predetermined function in the vehicle on-board network system, the target device being one of devices that are connected to the vehicle on-board network system. Based on the obtained information, the processing circuitry selects a startup method for the target device from a first startup method for starting the target device through power control that controls whether to supply power to the target device and a second startup method for starting the target device by communicating with the target device to request startup for the target device. The processing circuitry starts the target device using the selected startup method.

A control program according to an aspect of the present disclosure is a control program in a vehicle on-board network system that includes a management device. The control program causes processing circuitry to obtain, subsequent to modifications made to the vehicle on-board network system, information related to a target device that operated during execution of a predetermined function in the vehicle on-board network system, the target device being one of devices that are connected to the vehicle on-board network system. The control program causes the processing circuitry to, based on the obtained information, select a startup method for the target device from a first startup method for starting the target device through power control that controls whether to supply power to the target device and a second startup method for starting the target device by communicating with the target device to request startup for the target device. The control program causes the processing circuitry to start the target device using the selected startup method.

A control method according to an aspect of the present disclosure is a control method for controlling a vehicle on-board network system that includes a management device. The control method includes obtaining, subsequent to modifications made to the vehicle on-board network system, information related to a target device that operated during execution of a predetermined function in the vehicle on-board network system, the target device being one of devices that are connected to the vehicle on-board network system. The control method includes, based on the obtained information, selecting a startup method for the target device from a first startup method for starting the target device through power control that controls whether to supply power to the target device and a second startup method for starting the target device by communicating with the target device to request startup for the target device. The control method includes starting the target device using the selected startup method.

Other features and aspects will be apparent from the following detailed description, the drawings, and the claims.

### BRIEF DESCRIPTION OF THE DRAWINGS

Fig. 1 is a schematic diagram showing the configuration of a vehicle on-board network system including a management device according to an embodiment.
Fig. 2 is a flowchart illustrating the flow of processes related to the learning process executed by the management device shown in Fig. 1.
Fig. 3 is a flowchart illustrating the flow of processes related to the startup of the target device executed by the management device shown in Fig. 1.
Fig. 4 is a table illustrating an example of the information related to the target device that continued to operate along with the execution of functions, the information being obtained by the management device in Fig. 1 through the learning process.
Fig. 5 is a table illustrating the startup method for the target device for each bus network, the method being selected by the management device in Fig. 1 through the learning process.
Fig. 6 is a schematic diagram illustrating a mode of the learning process executed by the management device in a first example.
Fig. 7 is a schematic diagram illustrating a mode in which the target device is started by the management device that completed the learning process in the first example.
Fig. 8 is a schematic diagram showing the configuration of the vehicle on-board network system including the management device according to a first modification.
Fig. 9 is a flowchart illustrating the flow of processes related to the learning process executed by the management device according to a second modification.
Fig. 10 is a flowchart illustrating the flow of processes related to the learning process executed by the management device according to a third modification.
Fig. 11 is a flowchart illustrating the flow of processes related to the learning process executed by the management device according to a fourth modification.
Fig. 12 is a flowchart illustrating the flow of processes related to the startup of the target device executed by the management device according to a fifth modification.
Fig. 13 is a flowchart illustrating the flow of processes related to the learning process executed by the management device according to a sixth modification.
Fig. 14 is a flowchart illustrating the flow of processes related to the startup method determination process executed by the management device according to the sixth modification.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

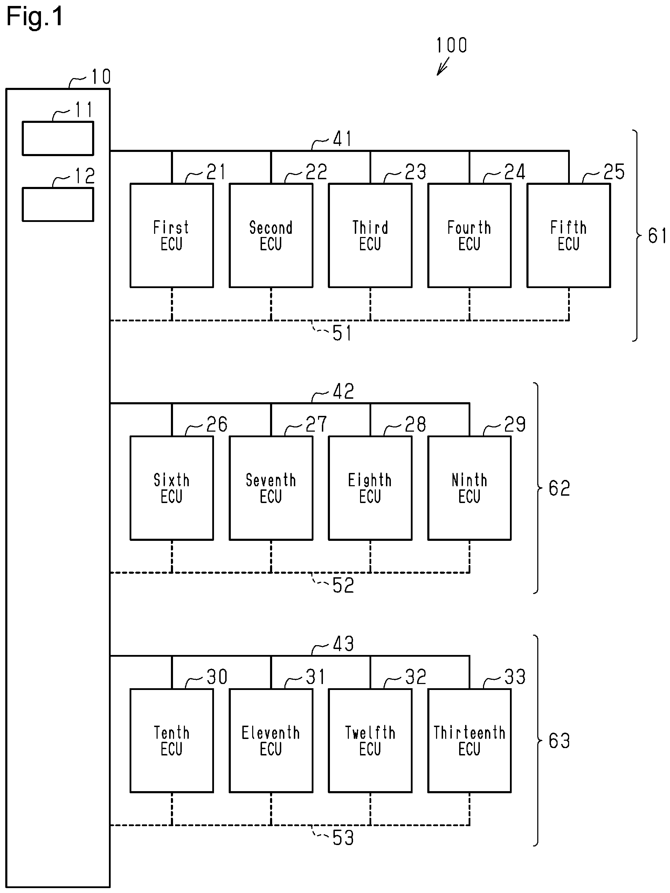

An embodiment of a management device will now be described with reference to Figs. 1 to 7.

### Configuration of Vehicle On-board Network System 100

As shown in Fig. 1, the vehicle on-board network system 100 includes electronic control units (ECUs). In Fig. 1, each ECU is depicted as a rectangle. The ECUs are connected to each other via a first communication line 41, a second communication line 42, and a third communication line 43 such that the units can communicate with each other. Thus, the ECUs form a vehicle on-board network. Each ECU is supplied with power from a power source. The ECU alternates between an active state, where processing can be performed, and a standby state, where operation is paused to reduce power consumption.

As shown in Fig. 1, one of the ECUs that form the vehicle on-board network is a management device 10. The management device 10 is connected to other ECUs that form the vehicle on-board network via the first communication line 41, second communication line 42, and third communication line 43 such that the units can communicate with each other. Specifically, the management device 10 is directly connected to a first ECU 21, a second ECU 22, a third ECU 23, a fourth ECU 24, and a fifth ECU 25 via the first communication line 41. The management device 10 is directly connected to a sixth ECU 26, a seventh ECU 27, an eighth ECU 28, and a ninth ECU 29 via the second communication line 42. The management device 10 is directly connected to a tenth ECU 30, an eleventh ECU 31, a twelfth ECU 32, and a thirteenth ECU 33 via the third communication line 43.

As indicated by the broken lines in Fig. 1, the management device 10 is also connected to other ECUs forming the vehicle on-board network via a first power control line 51, a second power control line 52, and a third power control line 53. Specifically, the management device 10 is directly connected to the first ECU 21, the second ECU 22, the third ECU 23, the fourth ECU 24, and the fifth ECU 25 via the first power control line 51. The management device 10 is directly connected to the sixth ECU 26, the seventh ECU 27, the eighth ECU 28, and the ninth ECU 29 via the second power control line 52. The management device 10 is directly connected to the tenth ECU 30, the eleventh ECU 31, the twelfth ECU 32, and the thirteenth ECU 33 via the third power control line 53.

In this manner, the management device 10 is connected to the first ECU 21, the second ECU 22, the third ECU 23, the fourth ECU 24, and the fifth ECU 25 via the first communication line 41 and the first power control line 51. As shown in Fig. 1, the first communication line 41, first power control line 51, the first ECU 21, the second ECU 22, the third ECU 23, the fourth ECU 24, and the fifth ECU 25 form a first bus network 61.

The management device 10 is connected to the sixth ECU 26, the seventh ECU 27, the eighth ECU 28, and the ninth ECU 29 via the second communication line 42 and the second power control line 52. As shown in Fig. 1, the second communication line 42, the second power control line 52, the sixth ECU 26, the seventh ECU 27, the eighth ECU 28, and the ninth ECU 29 form a second bus network 62.

The management device 10 is connected to the tenth ECU 30, the eleventh ECU 31, the twelfth ECU 32, and the thirteenth ECU 33 via the third communication line 43 and the third power control line 53. As shown in Fig. 1, the third communication line 43, the third power control line 53, the tenth ECU 30, the eleventh ECU 31, the twelfth ECU 32, and the thirteenth ECU 33 form a third bus network 63.

In this manner, the vehicle on-board network system 100 includes the first bus network 61, second bus network 62, and third bus network 63, each connected to the management device 10. The number of bus networks connected to the management device 10 is not limited to three. In other words, the management device 10 may be connected to any number of bus networks. The connection modes for the ECUs, that is, the topology of the vehicle on-board network, are not limited to the same topology as the present embodiment.

As shown in Fig. 1, the management device 10 includes a processing device 11 and a storage device 12. The storage device 12 stores programs. The programs stored in the storage device 12 includes a control program that controls startup of the ECUs in the vehicle on-board network system 100. The processing device 11 executes various processes by running the programs stored in the storage device 12. The processing device 11 is processing circuitry that includes one or more processors. The processing circuitry may include hardware circuitry including one or more dedicated hardware circuits such as an application-specific integrated circuit (ASIC) that execute at least some of the various processes or a combination thereof. Alternatively, the processing circuitry may include a combination of one or more processors and one or more dedicated hardware circuits. The storage device 12 includes a memory such as RAM and ROM. The memory, or a computer-readable medium, includes any type of media that are accessible by general-purpose computers and dedicated computers.

The management device 10 sends a signal to other ECUs on the vehicle on-board network, requesting them to start, thereby starting those ECUs. Hereinafter, the ECU started by the management device 10 according to a predetermined function executed in the vehicle on-board network system 100 is referred to as the target device. The management device 10 selects and starts multiple target devices necessary to enable functions from multiple ECUs connected to the management device 10 in the vehicle on-board network system 100. The management device 10 transitions the target device from the standby state to the active state by starting the target device. Multiple target devices started by the management device 10 communicate with each other to enable the predetermined function. The combination of target devices varies depending on the functions to be enabled.

In the vehicle on-board network system 100, the first ECU 21 to the thirteenth ECU 33 can be target devices. From these devices, the management device 10 selects and starts the target device according to the function to be enabled each time.

The management device 10 obtains a signal requesting to enable the predetermined function from other devices. For example, the management device 10 receives a signal requesting to enable the predetermined function from other ECUs connected via either the first communication line 41, the second communication line 42, or the third communication line 43.

In this manner, when the management device 10 receives a signal from other devices requesting to enable the predetermined function, the management device 10 designates, as the target device, the device corresponding to the function to be enabled. The management device 10 selects a startup method for the target device from a first startup method and a second startup method. The management device 10 selects the startup method for the target device on each bus network. In other words, the management device 10 uses the same startup method to start the target devices connected to the same bus network. For example, when the target devices corresponding to the function to be enabled are the first ECU 21, the second ECU 22, and the sixth ECU 26, the management device 10 starts the first ECU 21 and the second ECU 22, which are connected to the same bus network, using the same startup method. The management device 10 may use a different startup method to start the sixth ECU 26, which is connected to a bus network different from that of the first ECU 21 and the second ECU 22.

The management device 10 has information regarding which ECU the target device corresponds to and information regarding to which bus network at least one target device is connected. However, the management device 10 does not have information regarding to which bus network each of multiple target devices is connected.

Thus, the management device 10 selects the startup method for the target device based on the bus network for each function to be executed. The management device 10, when enabling a specific function, does not start the ECUs connected to the bus network to which a target device for that function is not connected.

When starting the target device using the first startup method, the management device 10 starts multiple target devices through power control. Specifically, the management device 10 sends a signal requesting the startup of multiple target devices through the power control line. The target device that receives a startup request signal from the management device 10 via the power control line reacts to this signal to receive power. As a result, the target device is started. When the management device 10 sends a signal request startup via the power control line, all ECUs that have received the startup request signal are started. That is, the ECUs directly connected to the management device 10 via the power control line, including ECUs that are not target devices, are all started. Thus, when the management device 10 sends a startup request signal via the first power control line 51, the first ECU 21, the second ECU 22, the third ECU 23, the fourth ECU 24, and the fifth ECU 25 are started. When the management device 10 sends a startup request signal via the second power control line 52, the sixth ECU 26, the seventh ECU 27, the eighth ECU 28, and the ninth ECU 29 are started. When the management device 10 sends a startup request signal via the third power control line 53, the tenth ECU 30, the eleventh ECU 31, the twelfth ECU 32, and the thirteenth ECU 33 are started. Thus, in the first startup method, the management device 10 controls whether to supply power to the target device by sending a startup request signal via a power control line.

In this manner, when the management device 10 starts a target device using the first startup method, the management device 10 also starts other ECUs connected to the power control line used to start that target device. Accordingly, the first startup method starts ECUs that are not target devices, and thus consumes excessive power.

To start a target device using the second startup method, the management device 10 sends, via a communication line, a message containing a startup request signal and identification information related to the target device to which the signal will be sent. The management device 10 sends the message to the first ECU 21, the second ECU 22, the third ECU 23, the fourth ECU 24, and the fifth ECU 25 via the first communication line 41. The management device 10 sends the message to the sixth ECU 26, the seventh ECU 27, the eighth ECU 28, and the ninth ECU 29 via the second communication line 42. The management device 10 sends the message to the tenth ECU 30, the eleventh ECU 31, the twelfth ECU 32, and the thirteenth ECU 33 via the third communication line 43.

As the ECU receives the message from the management device 10, it checks the information indicating the recipient contained in the received message. When the ECU that has received the message determines that the message is addressed to the ECU (i.e., determines that the ECU is a target device), the ECU is started according to the received signal. When the ECU that has received the message determines that the message is not addressed to the ECU, the ECU ignores the received signal. In this manner, the management device 10 sends a message via a communication line to start only a target device from multiple ECUs.

Thus, starting a target device using the second startup method prevents an unintended ECU, which is not the target device, from being started. However, in the second startup method, the ECU executes a process that determines whether a startup request signal is addressed to that ECU. As a result, the time required to start the target device is longer than in the first startup method.

As described above, the management device 10 starts a target device via a power control line when using the first startup method and via a communication line when using the second startup method.

Multiple target devices started by the management device 10 using the first or second startup method enable a predetermined function by executing processes while communicating with each other. While enabling the predetermined function, the target devices each enabling this function periodically send a signal requesting continued operation to the management device 10. While receiving the signal requesting continued operation from the target device, the management device 10 sends a message containing a startup request signal to the target device enabling the function via the communication line.

The target device started by the management device 10 continues to operate for a certain period each time it receives a message addressed to the target device, containing a startup request signal, via the communication line to which the target device is connected. When the target device does not receive a message addressed to the target device, including a startup request signal from the management device 10, via the connected communication line, the target device stops operating and transitions to the standby state.

Accordingly, the management device 10 selectively uses the first and second startup methods for each bus network, depending on the function to be enabled, to start the target device. This achieves both a reduction in power consumption and a quick startup. However, in a case in which modifications have been made to the vehicle on-board network system 100, which includes the management device 10, the same startup method as that used before the modifications is unlikely to achieve both a reduction in power consumption and a quick startup.

The modifications made to the vehicle on-board network system 100 include an increase or decrease in the number of the devices connected to the vehicle on-board network system 100. For example, there is a case in which an ECU connected to a certain bus network is added. In this case, the power consumed to start the target device connected to that bus network using the first startup method is increased by an amount corresponding to the added ECU.

The modifications made to the vehicle on-board network system 100 include software updates in a vehicle that includes the vehicle on-board network system 100. For example, there is a case in which the software for a vehicle is updated so that a change occurs in the target device to be started for a certain function or in the number of target devices to be started. This results in a change in the power consumption when the target device is started for that function using the first startup method.

The modifications made to the vehicle on-board network system 100 include the rearrangement of the devices connected to the vehicle on-board network system 100. For example, when the positions of the first ECU 21 and the sixth ECU 26 are rearranged to exchange their locations, regarding the function that uses the first ECU 21 and does not use the sixth ECU 26, the number of target devices to be started decreases in the first bus network 61. The number of target devices to be started increases in the second bus network 62.

In this manner, modifications may be made to the vehicle on-board network system 100. Even in such a case, to achieve both a reduction in power consumption and a quick startup, the management device 10 selectively uses the startup method for the target device in correspondence with the modified vehicle on-board network system 100.

### Flow of Learning Process Executed by Processing Device 11

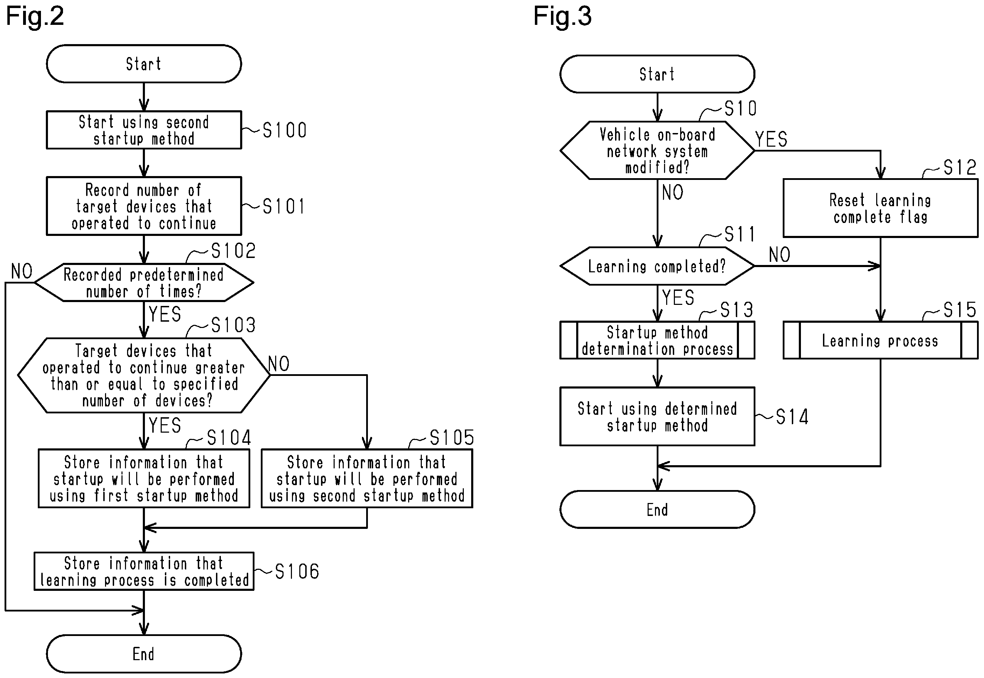

Fig. 2 illustrates the flow of a learning process executed by the processing device 11. The processing device 11 of the management device 10 executes the series of processes in accordance with the control program stored in the storage device 12.

In the learning process, after obtaining information related to the modified vehicle on-board network system 100, the management device 10 reselects the startup method for the target device to learn the startup method for the target device in the modified vehicle on-board network system 100. The information related to the modified vehicle on-board network system 100 specifically refers to the information related to a target device that operated during the execution of a predetermined function, the target device being one of the devices connected to the vehicle on-board network system 100 to which modifications has been made. From that information, the management device 10 obtains data related to the number of target devices that operated along with the execution of the predetermined function.

The learning process allows the management device 10 to adapt to the vehicle on-board network system 100 to which modifications have been made. The management device 10 selects the startup method for each bus network and thus executes the learning process for each bus network as well. The management device 10 does not execute the learning process for the bus network to which no target devices are connected.

Fig. 3 illustrates the flow of processes related to the startup of the target device executed by the processing device 11. The series of processes in Fig. 3 is executed when the management device 10 receives a request for enabling a predetermined function from another device. The learning process shown in Fig. 2 corresponds to the process of step S15 in Fig. 3. Thus, the series of processes in Fig. 2 is executed when the management device 10 receives a request for enabling the predetermined function from another device and then starts the target device.

First, the flow of the learning process will be described with reference to Fig. 2.

As shown in Fig. 2, upon initiating the series of processes, the processing device 11 starts the target device on the bus network using the second startup method in the process of step S100. In other words, when the management device 10 starts the target device in correspondence with a signal requesting the enabling of a predetermined function, the processing device 11 starts the target device using the second startup method regardless of the startup method used for the bus network in the vehicle on-board network system 100 to which the modifications have not been made.

In the next step S101, the processing device 11 records the number of target devices that continued to operate. During the enabling of the predetermined function, each target device periodically sends a signal requesting continuation of operation to the management device 10. In other words, the ECU that is sending a signal that requests continued operation is the target device that continued to operate in order to enable the predetermined function. From the received signal requesting continued operation, the management device 10 identifies the number of target devices that continued to operate.

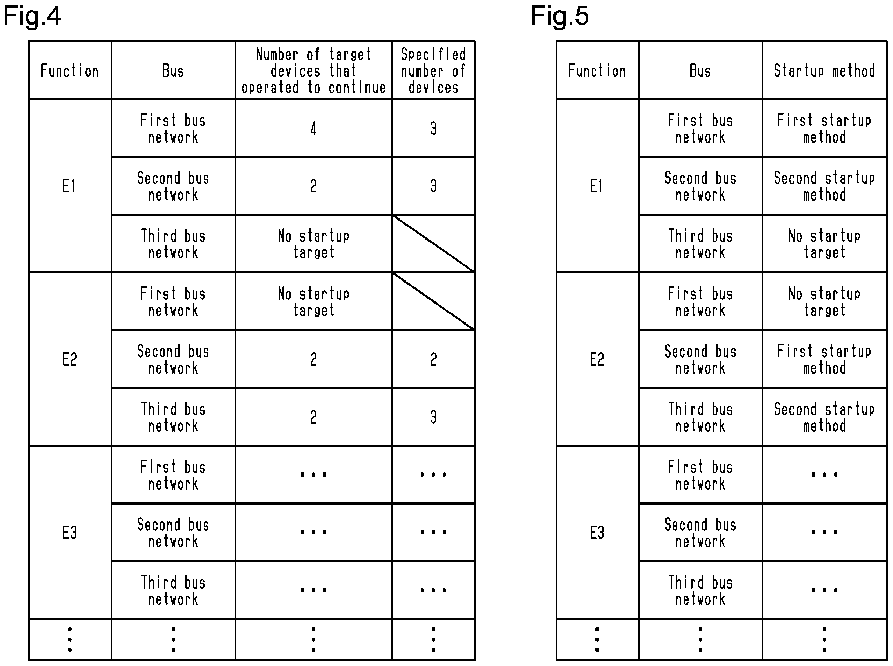

The table shown in Fig. 4 illustrates an example of the data related to the number of target devices that continued to operate. The data is recorded by the processing device 11 through the process of step S101. As previously mentioned, the series of processes shown in Fig. 2 is executed for each bus network. Thus, as shown in Fig. 4, the management device 10 records the number of target devices that continued to operate in each bus network for one function. In Fig. 4, multiple distinct functions are labeled as E1, E2, E3, and continue in this manner.

As previously mentioned, while the management device 10 has information indicating to which bus network at least one target device to be started is connected, the management device 10 does not have information indicating to which bus network each target device is connected. However, by executing the above-described processes, the management device 10 can obtain data related to the number of target devices connected to each bus network.

Thus, the management device 10 obtains information related to the target device that continued to operate along with the execution of the predetermined function, as the information related to the target device that operated during the execution of the predetermined function. The management device 10 obtains data related to the number of target devices that continued to operate along with the execution of the predetermined function, as the data related to the number of target devices that operated along with the execution of the predetermined function.

In the process of the next step S102, the processing device 11 determines whether it has recorded the number of target devices that continued to operate a predetermined number of times. That is, in the process of step S102, the processing device 11 determines whether it has executed the process of step S101 the predetermined number of times by executing the series of processes shown in Fig. 2 multiple times. The predetermined number of times may be multiple times or just once.

When the processing device 11 determines that it has not recorded the number of target devices that continued to operate the predetermined number of times (step S102: NO), the processing device 11 ends the series of processes.

When the processing device 11 determines that it has recorded the number of target devices that continued to operate the predetermined number of times (step S102: YES), the processing device 11 advances the process to step S103.

In the process of the next step S103, the processing device 11 determines whether the number of target devices that continued to operate is greater than or equal to a specified number of devices. As shown in Fig. 4, the specified number of devices may be set to a different value for each bus network, even if the same function is executed. The specified number of devices may be set to a different value depending on the function to be executed, even if the same bus network is used.

By recording the number of target devices that continued to operate the predetermined number of times, the processing device 11 obtains data related to the number of target devices that continued to operate. The amount of the data corresponds to the predetermined number of times. In the process of step S103 of the present embodiment, the processing device 11 uses the average value of the data corresponding to the predetermined number of times to compare the number of target devices that continued to operate with the specified number of devices. The value that the processing device 11 compares with the specified number of devices in the process of step S103 may be the median, mode, or total value of the data for the predetermined number of times.

When determining that the number of target devices that continued to operate is greater than or equal to the specified number of devices (step S103: YES), the processing device 11 advances the process to the next step S104. In the process of step S104, regarding the bus network in which the number of target devices that continued to operate is greater than or equal to the specified number of devices, the processing device 11 stores, in the storage device 12, information that the target device connected to that bus network will be started using the first startup method. That is, the processing device 11 selects the first startup method as the startup method from the first and second startup methods.

When determining that the number of target devices that continued to operate is less than the specified number of devices (step S103: NO), the processing device 11 advances the process to step S105. In the process of step S105, regarding the bus network in which the number of target devices that continued to operate is less than the specified number of devices, the processing device 11 stores, in the storage device 12, information that the target device connected to that bus network will be started using the second startup method. That is, the processing device 11 selects the second startup method as the startup method from the first and second startup methods.

The table shown in Fig. 5 illustrates an example of the startup methods stored in the storage device 12 by the processing device 11 in the processes of step S104 and step S105. For the functions to be executed by the management device 10, the processing device 11 selects the startup method for the target device on each bus network. The processing device 11, as shown in Fig. 5, learns the startup method for the target device in the vehicle on-board network system 100 by storing, in the storage device 12, the startup method for the target device for each bus network in the functions.

After executing the process of step S104 or step S105, the processing device 11 advances the process to step S106. In the process of step S106, the processing device 11 stores, in the storage device 12, information that the learning process is completed. Specifically, the flag in the storage device 12 is switched from a state in which the learning process is incomplete to a state where the learning process is completed. After executing the process of step S106, the processing device 11 ends the series of processes.

### Flow of Processes Executed by Processing Device 11 to Start Target Device

As described above, Fig. 3 illustrates the flow of processes related to the startup of the target device executed by the processing device 11. The processing device 11 of the management device 10 executes the series of processes in accordance with the control program stored in the storage device 12. The series of processes is executed when the management device 10 receives a request for enabling a predetermined function from another device. Thus, the processing device 11 executes the series of processes for each function executed by the management device 10.

Upon initiating the series of processes, the processing device 11 determines in the process of step S10 whether any modifications have been made to the vehicle on-board network system 100. Modifications made to the vehicle on-board network system 100 affect the execution of functions by the management device 10. Thus, the programs stored in the storage device 12 are updated or similarly modified. The processing device 11 determines in the process of step S10 whether such an event, notifying that modifications have been made to the vehicle on-board network system 100, has occurred.

When determining that modifications have been made to the vehicle on-board network system 100 (step S10: YES), the processing device 11 proceeds to step S12. In the process of step S12, the processing device 11 resets the learning complete flag. The processing device 11 switches the flag to indicate that the learning process is completed in the process of step S106 of Fig. 2. In the process of step S12, the processing device 11 resets this flag to indicate that the learning process is incomplete. This flag is reset for each function. After resetting the learning complete flag, the processing device 11 advances the process to step S15.

When determining that no modifications have been made to the vehicle on-board network system 100 (step S10: NO), the processing device 11 proceeds to step S11. In the process of step S11, the processing device 11 determines whether the learning is completed. The processing device 11 determines whether the learning is completed based on whether the flag indicates that the learning process is completed.

When determining that the learning is incomplete (step S11: NO), the processing device 11 advances the process to step S15.

In the process of step S15, the processing device 11 executes the learning process shown in Fig. 2, as described above. After executing the learning process in the process of step S15, the processing device 11 ends the series of processes.

When determining that the learning is completed (step S11: YES), the processing device 11 advances the process to step S13. In the process of step S13, the processing device 11 executes a startup method determination process. The startup method determination process determines the startup method for the target device on each bus network based on the results, as shown in Fig. 5, learned in the processes of step S104 and step S105 in Fig. 2.

In the next step S14, the processing device 11 starts the target device using the startup method determined in the process of step S13. After starting the target device, the processing device 11 ends the series of processes.

### Operation of Present Embodiment

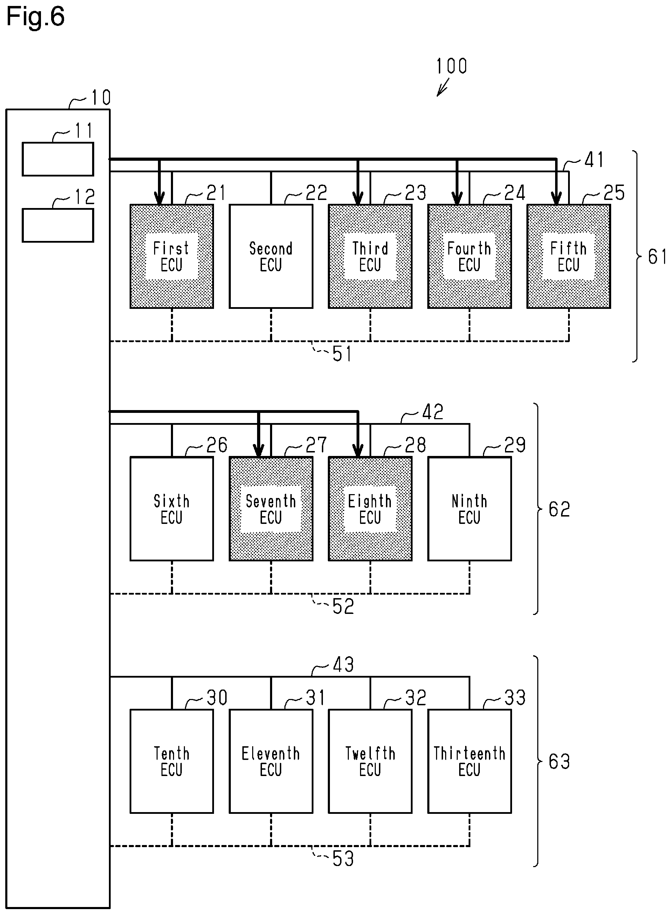

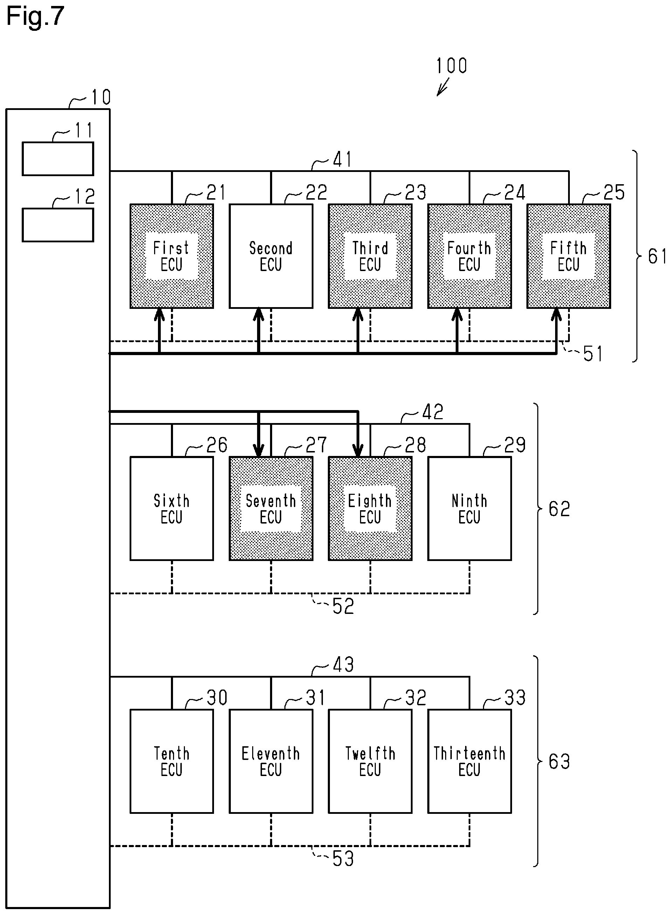

Figs. 6 and 7 illustrate a first example in which the management device 10 starts the target device. A mode in which the management device 10 starts the target device will now be described with the first example, in which the management device 10 starts the target device.

Figs. 6 and 7 illustrate how the management device 10 starts the target device in the first example. In the first example, in the vehicle on-board network system 100, after the fifth ECU 25 and the ninth ECU 29 are added, the function E1 is executed in response to a signal requesting the enabling of a predetermined function from another device. The function E1 is one of the functions to be executed by the management device 10. The function E1 is enabled by the first ECU 21, the third ECU 23, the fourth ECU 24, the fifth ECU 25, the seventh ECU 27, and the eighth ECU 28.

Fig. 6 illustrates how the learning process is executed in the first example.

In the first example, the processing device 11 of the management device 10 first determines that modifications have been made to the vehicle on-board network system 100 in the process of step S10 in Fig. 3 (step S10: YES).

Subsequently, the processing device 11 resets the learning complete flag in the process of step S12, and then executes the learning process illustrated in Fig. 2 for each bus network to which the target device is connected (step S15).

In this case, the processing device 11 executes the learning process for the first bus network 61.

The processing device 11 executes the process of step S100 in Fig. 2 to start the target device on the first bus network 61 using the second startup method. The processing device 11 sends a message to the target device on the first bus network 61 via the first communication line 41. As indicated by the arrows in Fig. 6, the processing device 11 starts the first ECU 21, the third ECU 23, the fourth ECU 24, and the fifth ECU 25 via the first communication line 41.

Next, the processing device 11 executes the process of step S101 in Fig. 2 to record the number of target devices that continued to operate. As shown in Fig. 6, four target devices continued to operate during the execution of the function E1 on the first bus network 61. These devices are the first ECU 21, the third ECU 23, the fourth ECU 24, and the fifth ECU 25. The third column of the table in Fig. 4 reflects the information related to the number of target devices that continued to operate. The information is obtained through the learning process.

Next, the processing device 11 executes the process of step S102 in Fig. 2 to determine whether the recording in step S101 has been performed the predetermined number of times. In a case in which the processing device 11 has performed the recording in step S101 the predetermined number of times, it advances the process to the next step S103.

In the process of step S103, the processing device 11 compares the number of target devices that continued to operate on the first bus network 61 with the specified number of devices. The processing device 11 proceeds to step S104 or step S105 based on whether the number of target devices that continued to operate is greater than or less than the specified number of devices.

As shown in Fig. 4, in the first example, the number of target devices that continued to operate on the first bus network 61 is greater than or equal to the specified number of devices. Thus, in the process of step S104, the processing device 11, as shown in Fig. 5, stores, in the storage device 12, the information that the target devices on the first bus network 61 will be started using the first startup method. When the learning is completed in this manner, in the process of step S106, the processing device 11 switches the learning complete flag corresponding to the function E1 for the first bus network 61 to a state indicating that the learning process is completed.

The processing device 11 executes the same process for the second bus network 62.

The processing device 11 executes the process of step S100 in Fig. 2 to start the target devices on the second bus network 62 using the second startup method. The processing device 11 sends a message to the target devices on the second bus network 62 via the second communication line 42. As shown by the arrows in Fig. 6, the processing device 11 starts the seventh ECU 27 and the eighth ECU 28 via the second communication line 42.

Next, the processing device 11 executes the process of step S101 in Fig. 2 to record the number of target devices that continued to operate. As shown in Fig. 6, in the first example, two target devices continued to operate during the execution of E1 on the second bus network 62. The target devices are the seventh ECU 27 and the eighth ECU 28.

In the same manner, the processing device 11 executes the processes of step S102 and step S103 for the second bus network62. As shown in Fig. 4, in the first example, the number of target devices that continued to operate on the second bus network 62 is less than the specified number of devices. Thus, in the process of step S105, the processing device 11, as shown in Fig. 5, stores, in the storage device 12, the information that the target devices on the second bus network 62 will be started using the second startup method. When the learning is completed in this manner, the processing device 11 switches the learning complete flag corresponding to the function E1 for the second bus network 62 to a state indicating that the learning process is completed in step S106.

In the third bus network 63, since there is no target device that needs to be started to execute the function E1, no learning process is performed.

After executing the learning process for the bus network to which the target device that needs to be started to execute the function E1 is connected, the processing device 11 ends the series of processes shown in Fig. 3.

Fig. 7 illustrates a mode in which, following the completion of the learning process, the management device 10 executes the function E1 upon receiving a signal requesting the enabling of a predetermined function from another device.

When the processing device 11 executes the function E1 again after the learning process is completed (step S11: YES), it executes the process of step S13 in Fig. 3. In the startup method determination process of step S13, the processing device 11 determines the startup method for the target device on each bus network based on the results of the learning process.

As shown in Fig. 5, the processing device 11 determines that the target device connected to the first bus network 61 will be started using the first startup method. As shown in Fig. 5, the processing device 11 determines that the target device connected to the second bus network 62 will be started using the second startup method.

Then, in the process of step S14, the processing device 11 uses the startup method determined in the process of step S13 to start the target device for each bus network. Specifically, the processing device 11 starts the target device connected to the first bus network 61 using the first startup method. As indicated by the arrows in Fig. 7, the processing device 11 starts all ECUs on the first bus network 61 using the first startup method via the first power control line 51. The processing device 11 starts the target devices connected to the second bus network 62 using the second startup method. The processing device 11 sends a message to the target devices on the second bus network 62 via the second communication line 42. As shown by the arrows in Fig. 7, the processing device 11 starts only the target devices using the second startup method via the second communication line 42.

Thus, in a case in which modifications have been made to the vehicle on-board network system 100, the management device 10 obtains information related to target devices that continued to operate during the execution of a function in the modified vehicle on-board network system 100. That is, the management device 10 obtains information related to target devices that need to be started to enable a predetermined function. The management device 10 starts the target devices using the startup method selected based on the obtained information.

### Advantages of Present Embodiment

(1) The management device 10 selects the startup method based on information obtained through the learning process to start the target device using the selected startup method. This allows the management device 10 to reselect the startup method for the target device in a case in which modifications have been made to the vehicle on-board network system 100.
(2) The management device 10 selects the startup method for the target device based on the obtained information and then learns the startup method for the target device by storing the selected startup method. The management device 10 starts the target device using the learned startup method. This allows the management device 10 to smoothly determine the startup method for the target device each time a function is executed, without selecting the startup method for the target device.
(3) Subsequent to modifications made to the vehicle on-board network system 100, the management device 10 uses the second startup method to start the target device, thereby obtaining information related to the target device that operated during the execution of a predetermined function. The use of the second startup method to start the target device allows the management device 10 to start the target device while reducing power consumption than the use of the first startup method. The management device 10 starts the target device using the second startup method in order to obtain information related to the target device that operated during the execution of the predetermined function. This allows the management device 10 to obtain the information while starting the target device with reduced power consumption.
(4) From multiple devices in the vehicle on-board network system 100 to which modifications have been made, the management device 10 obtains data related to the number of target devices that operated during the execution of a predetermine function. The management device 10 obtains the data as information related to the target device that operated along with the execution of the predetermined function.
   The first startup method allows the target device to start quickly, but consumes a relatively high power consumption. The second startup method consumes less power to start the target device than the first startup method, but it takes more time to start. When a larger number of target devices operated along with the execution of a predetermined function provided by the vehicle, the difference in power consumption between the first and second startup methods becomes smaller. The management device 10 selects the startup method for the target device based on the number of target devices that operated along with the execution of the predetermined function, which is provided by the vehicle. This allows the management device 10 to select the startup method based on information correlating with the power consumption that can be reduced by selecting the second startup method.
(5) To select the startup method for the target device, the management device 10 selects the first startup method when the number of target devices that operated along with the execution of the predetermined function is greater than or equal to the specified number of devices. The management device 10 selects the second startup method when the number of target devices that operated along with the execution of the predetermined function is less than the specified number of devices. As the number of target devices that operated along with the execution of the predetermined function is relatively small, selecting the second startup method reduces the power consumption. As the number of target devices that operated along with the execution of the predetermined function is relatively large, selecting the second startup method results in less reduction in power consumption and longer startup times. The management device 10 selects the startup method for the target device by comparing the specified number of devices with the number of target devices that operated along with the execution of the predetermined function provided by the vehicle. Even if modifications have been made to the vehicle on-board network system 100, the above configuration allows the management device 10 to select a startup method that achieves both a reduction in power consumption and a quick startup.
(6) The vehicle on-board network system 100 includes multiple bus networks connected to the management device 10. The power control line that starts the target device using the first startup method is provided for each bus network. The management device 10 obtains information for each bus network to select the startup method for the target device on each bus network.

When a large number of target devices need to be started when a vehicle executes a certain function, the difference in power consumption between the first and second startup methods is relatively small. Thus, the startup method for the target device that is optimal for the entire vehicle on-board network system 100 is the first startup method.

However, the bus networks in the vehicle on-board network system 100 may include a bus network that does not have a target device corresponding to the above-described function. The bus networks in the vehicle on-board network system 100 may include a bus network in which only a small number of ECUs connected to the bus network are target devices. The target device connected to such bus networks is preferably started using the second startup method. Thus, the startup method that is optimal for the entire vehicle on-board network system 100 may not be optimal for each bus network.

The management device 10 selects the startup method for the target device on each bus network in the vehicle on-board network system 100. This enables the management device 10 to start ECUs while achieving both a reduction in power consumption and a quick startup in a well-balanced manner.

(7) Examples of the modifications made to the vehicle on-board network system 100 include an increase or decrease in the number of the devices connected to the vehicle on-board network system 100. This allows the management device 10 to select the startup method for the target device in correspondence with a change in the number of devices connected to the vehicle on-board network system 100.

(8) Examples of the modifications made to the vehicle on-board network system 100 include software updates in a vehicle that includes the vehicle on-board network system 100. This allows the management device 10 to select the startup method for the target device in correspondence with software updates in the vehicle including the vehicle on-board network system 100.

(9) Examples of the modifications made to the vehicle on-board network system 100 include the rearrangement of the devices connected to the vehicle on-board network system 100. This allows the management device 10 to select the startup method for the target device in correspondence with the rearrangement of devices connected to the vehicle on-board network system 100.

(10) The control program controls the vehicle on-board network system 100, which includes the management device 10. Subsequent to modifications made to the vehicle on-board network system 100, the control program causes the management device 10 to obtain information. The information is related to a target device that operated to execute a predetermined function in the vehicle on-board network system 100, the target device being as one of multiple devices connected to the vehicle on-board network system 100. The control program causes the management device 10 to select, from the first and second startup methods, the startup method for the target device in correspondence with the function based on the obtained information. In the first startup method, the management device 10 starts the target device through power control that determines whether to supply power to the target device. In the second startup method, the management device 10 starts the target device by communicating with the target device to request startup for the target device. The control program causes the management device 10 to start the target device using the selected startup method.

In a case in which modifications have been made to the vehicle on-board network system 100, the control program causes the management device 10 to obtain information related to the target devices that continued to operate during the execution of the predetermined function in the modified vehicle on-board network system 100. That is, the control program causes the management device 10 to obtain information related to the target devices that need to be started to enable the predetermined function. The control program causes the management device 10 to start the target device based on the obtained information. As a result, the control program allows the management device 10 to reselect the startup method for the target device in a case in which modifications have been made to the vehicle on-board network system 100.

(11) The control method is performed to control the vehicle on-board network system 100, which includes the management device 10. The control method includes the step (step S101) for the management device 10 to obtain information subsequent to modifications made to the vehicle on-board network system 100. The information obtained by the management device 10 is related to a target device that operated to execute a predetermined function in the vehicle on-board network system 100, the target device being as one of multiple devices connected to the vehicle on-board network system 100. The control method includes the steps (steps S103 to step S106) for the management device 10 to select, from the first and second startup methods, the startup method for the target device in correspondence with the function based on the obtained information. In the first startup method, the management device 10 starts the target device through power control that determines whether to supply power to the target device. In the second startup method, the management device 10 starts the target device by communicating with the target device to request startup for the target device. The control method includes the step (step S14) for the management device 10 to start the target device using the selected startup method.

The control method includes obtaining, in a case in which modifications have been made to the vehicle on-board network system 100, information related to the target devices that continued to operate during the execution of the predetermined function in the modified vehicle on-board network system 100. That is, the control method includes obtaining information related to the target devices that need to be started to enable the predetermined function. The control method includes causing the management device 10 to start the target device based on the obtained information. As a result, executing the control method allows the management device 10 to reselect the startup method for the target device in a case in which modifications have been made to the vehicle on-board network system 100.

### Modifications

The present embodiment may be modified as follows. The present embodiment and the following modifications can be combined as long as they remain technically consistent with each other.

In the above-described embodiment, the management device 10 obtains information related to the target device that continued to operate along with the execution of a function by starting the target device at a time of executing the function. Instead, the management device 10 may obtain the information at a different time than when the function is executed.

For example, the management device 10 sends to the target device a message that is to be sent when the target device is started using the second startup method, with a signal indicating that the message is being sent for the learning process. The target device addressed by the message identifies the message as being sent at a different time than when the function is executed. Then, without being started, the target device sends a signal indicating that the target device has responded to the message. The target device addressed by the message is a target device that continues to operate in order to execute a function when the function is executed. This allows the management device 10 to obtain information related to the target device that continued to operate along with the execution of the function by receiving a signal indicating that the target device has responded to the message.

Modifications may be made to the vehicle on-board network system 100 in the following two cases. In the first case, modifications are made to the vehicle on-board network system 100 after a vehicle including the vehicle on-board network system 100 is sold. In the second case, modifications are made to the vehicle on-board network system 100 during the design and development stages of the vehicle including the vehicle on-board network system 100.

In the second case, modifications may be made not only to the vehicle on-board network system 100 but also to a simulation environment. Specifically, the settings of each device in the vehicle may be adjusted within a simulation environment that virtually replicates the state in which modifications have been made to the vehicle on-board network system 100. By connecting the management device 10 to a simulation model that replicates the vehicle on-board network system 100 and executing the learning process, the information related to the target device that continued to operate along with the execution of the function can be obtained.

In the above-described embodiment, the management device 10 starts multiple target devices to enable a function. The number of target devices required to enable the function does not have to be more than one. The management device 10 may start a single target device.

For example, when the target device can independently enable a predetermined function, the management device 10 may start a single target device. For example, when multiple management devices 10 start a different target device, the management devices 10 may start one target device.

In the above-described embodiment, multiple ECUs in the vehicle on-board network system 100 are connected to each other via the first communication line 41, the second communication line 42, and the third communication line 43 such that the units can communicate with each other. Instead, the ECUs in the vehicle on-board network system 100 may be connected to each other via wireless communication such that they can communicate with each other. In this case, the management device 10 starts a target device using the second startup method through wireless communication, without using the first communication line 41, the second communication line 42, or the third communication line 43.

In the above-described embodiment, the ECUs in the vehicle on-board network system 100 are supplied with power from the power source. All ECUs in the vehicle on-board network system 100 may be supplied with power from a single power source. Alternatively, multiple power sources may each supply power to a different ECU.

In the above-described embodiment, when using the second startup method, the management device 10 sends a message containing a startup request signal and identification information related to the target device to which the signal will be sent. When the management device 10 starts the target device using the second startup method, the message does not have to contain the identification information related to the target device to which the signal will be sent. For example, when starting the target device using the second startup method, the management device 10 sends a startup request signal to all ECUs via the first communication line 41, the second communication line 42, and the third communication line 43. In this case, the management device 10 sends a message containing a signal containing a startup request signal and identification information related to an ECU to which the signal will not be sent.

All ECUs that have received the message verifies the identification information contained in the message. Each ECU ignores the message when the identification information contained in the message matches its own identification information. Each ECU receives the message to start when the identification information contained in the message does not match its own identification information.

In the above-described embodiment, in the process of step S101 in Fig. 2, the management device 10 obtains data related to the number of target devices that continued to operate during the execution of a function, as information related to the target device that continued to operate during the execution of the function. The information, obtained by the management device 10, related to the target device that continued to operate along with the execution of the function is not limited to such data. For example, the management device 10 may obtain data related to the ID of the target device that continued to operate during the execution of a function, as information related to the target device that continued to operate along with the execution of the function.

In the above-described embodiment, the power control lines and communication lines included in a bus network are connected to all ECUs connected to the bus network. That is, the power control lines and the communication lines included in the same bus network have the same combination of ECUs that are connected to these lines. The power control lines and the communication lines included in the same bus network may have a different combination of ECUs that are connected to these lines. For example, regarding the ECUs connected to the bus network, there may be a configuration in which the communication lines are connected to all ECUs while the power control lines are connected to some of the ECUs.

In the above-described embodiment, the management device 10 obtains, for each bus network, information related to the target device that continued to operate along with the execution of a function. The management device 10 selects the startup method for the target device on each bus network. However, the management device 10 does not have to obtain information and select the startup method for each bus network as described above. For example, the management device 10 may collectively obtain information and select the startup method for all ECUs connected to the management device 10. In this case, for example, among all ECUs connected to the management device 10, the management device 10 may obtain data related to the number of target devices that continued to operate along with the execution of a function and then select the startup method based on that data.

In the above-described embodiment, the vehicle on-board network system 100 is configured such that multiple bus networks, each including a single communication line and a single power control line, are connected to the management device 10. The configuration of the vehicle on-board network system 100 is not limited thereto. For example, the vehicle on-board network system 100 may include a single power control line and multiple communication lines connected to the management device 10. For example, the vehicle on-board network system 100 may include a single communication line and multiple power control lines connected to the management device 10. Thus, the vehicle on-board network system 100 may have any number of power control lines and communication lines as long as it includes both types.

In the above-described embodiment, when the management device 10 starts the target device using the first startup method, it sends a startup request signal via the power control line. Instead, the management device 10 may use the first startup method to start the target device by controlling the supply of power from the power source via the power control line.

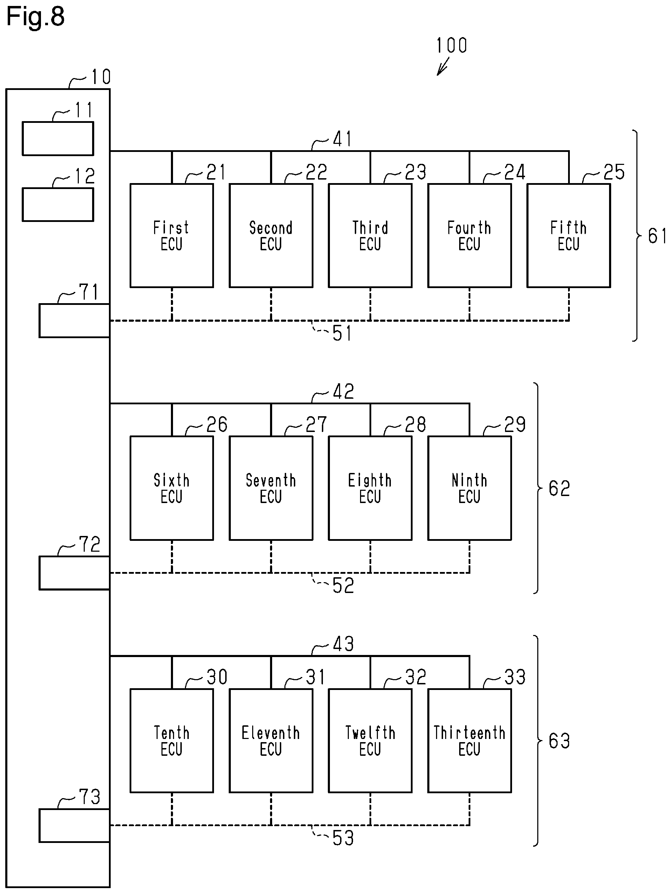

Fig. 8 shows the configuration of the vehicle on-board network system 100 including the management device 10 according to a first modification. In the first modification, the vehicle on-board network system 100 includes a first relay 71, a second relay 72, and a third relay 73.

The first relay 71 is connected to the first power control line 51. The first relay 71 controls whether to supply power to the first ECU 21, the second ECU 22, the third ECU 23, the fourth ECU 24, and the fifth ECU 25. When the first relay 71 is in a closed state, power is supplied to the first ECU 21, the second ECU 22, the third ECU 23, the fourth ECU 24, and the fifth ECU 25 via the first power control line 51.

The second relay 72 is connected to the second power control line 52. The second relay 72 controls whether to supply power to the sixth ECU 26, the seventh ECU 27, the eighth ECU 28, and the ninth ECU 29. When the second relay 72 is in a closed state, power is supplied to the sixth ECU 26, the seventh ECU 27, the eighth ECU 28, and the ninth ECU 29 via the second power control line 52.

The third relay 73 is connected to the third power control line 53. The third relay 73 controls whether to supply power to the tenth ECU 30, the eleventh ECU 31, the twelfth ECU 32, and the thirteenth ECU 33. When the third relay 73 is in a closed state, power is supplied to the tenth ECU 30, the eleventh ECU 31, the twelfth ECU 32, and the thirteenth ECU 33 via the third power control line 53.

In the first modification, the management device 10 uses the first startup method to control the power supply to the target devices via the power control line by operating the first relay 71, the second relay 72, and the third relay 73.

In the first modification, the management device 10 starts the ECUs connected to the first power control line 51 by closing the first relay 71. In the first modification, the management device 10 starts the ECUs connected to the second power control line 52 by closing the second relay 72. In the first modification, the management device 10 starts the ECUs connected to the third power control line 53 by closing the third relay 73. In this manner, even if the management device 10 is configured to control the power supply from the power source via the power control lines, the first startup method can be performed in the same manner as the above-described embodiment.

However, when a relay is in an open state, power is not supplied to ECUs. Thus, a target device cannot be started using the second startup method. Thus, the first startup method, which controls a relay, is executed when the learning process is performed to start the target device using the first startup method. This will be described later in a second modification. Alternatively, the first startup method, which controls a relay, may be executed for, for example, a bus network in which target devices will not be started using the second startup method for any function.

When the relay is in an open state, power is not supplied to ECUs. Thus, no power is consumed. Therefore, the standby power can be reduced by a configuration in which the bus network using a method for sending a startup request signal via a power control line as the first startup method is combined with the bus network using a method for controlling a relay as the first startup method.

In the above-described embodiment, in the process of step S100 in the learning process of Fig. 2, to obtain information related to the target device that continued to operate along with the execution of a function, the processing device 11 starts the target device using the second startup method. Instead, the processing device 11 may start the target device using the first startup method in the learning process.

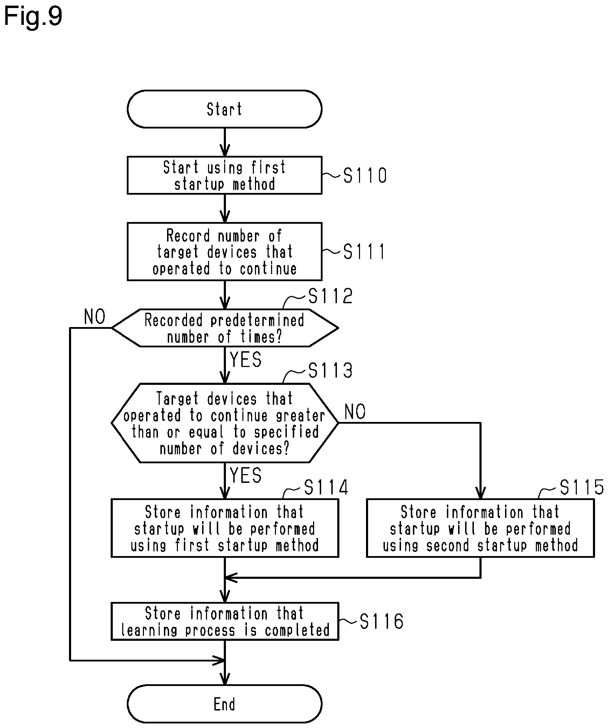

Fig. 9 illustrates the processes executed by the processing device 11 of the management device 10 in the learning process in the second modification. The processing device 11 executes the series of processes shown in Fig. 9, instead of the series of processes shown in Fig. 2.

In the process of step S110, the processing device 11 starts the target device in the bus network using the first startup method. In other words, when the management device 10 starts the target device in correspondence with a signal requesting the enabling of a predetermined function, the processing device 11 starts the target device using the first startup method regardless of the startup method used for the bus network in the vehicle on-board network system 100 to which modifications have not been made.

In the process of step S111, the processing device 11 records the number of target devices that continued to operate. This process is the same as that of step S101 in Fig. 2.

In the process of step S112, the processing device 11 determines whether it has recorded the number of target devices that continued to operate the predetermined number of times. This process is the same as that of step S102 in Fig. 2.

When the processing device 11 determines that it has not recorded the number of target devices that continued to operate the predetermined number of times (step S112: NO), the processing device 11 ends the series of processes.

When the processing device 11 determines that it has recorded the number of target devices that continued to operate the predetermined number of times (step S112: YES), the processing device 11 advances the process to step S113. In the process of the next step S113, the processing device 11 determines whether the number of target devices that continued to operate is greater than or equal to the specified number of devices. This process is the same as that of step S103 in Fig. 2.

When determining that the number of target devices that continued to operate is greater than or equal to the specified number of devices (step S113: YES), the processing device 11 advances the process to step S114. In the process of step S114, regarding the bus network in which the number of target devices that continued to operate is greater than or equal to the specified number of devices, the processing device 11 stores, in the storage device 12, information that the target device connected to that bus network will be started using the first startup method. This process is the same as that of step S104 in Fig. 2.

When determining that the number of target devices that continued to operate is less than the specified number of devices (step S113: NO), the processing device 11 advances the process to step S115. In the process of step S115, regarding the bus network in which the number of target devices that continued to operate is less than the specified number of devices, the processing device 11 stores, in the storage device 12, information that the target device connected to that bus network will be started using the second startup method. This process is the same as that of step S105 in Fig. 2.

After executing the process of step S114 or step S115, the processing device 11 advances the process to step S116. In the process of step S116, the processing device 11 stores, in the storage device 12, information that the learning process is completed. This process is the same as that of step S106 in Fig. 2. After executing the process of step S116, the processing device 11 ends the series of processes.

Subsequent to the modifications made to the vehicle on-board network system 100, the management device 10 uses the first startup method to start the target device, thereby obtaining information related to the target device that operated along with the execution of a function.

The management device 10 starts the target device more quickly when using the first startup method than when using the second startup method. The management device 10 starts the target device using the first startup method in order to obtain information related to the target device that operated during the execution of the predetermined function. This allows the management device 10 to obtain the information while enabling the function with the target device started quickly.

In the above-described embodiment, in the process of step S100 in the learning process of Fig. 2, to obtain information related to the target device that continued to operate along with the execution of a function, the processing device 11 starts the target device using the second startup method. Instead, in the learning process, the processing device 11 may start the target device using a startup method used before modifications were made to the vehicle on-board network system 100.

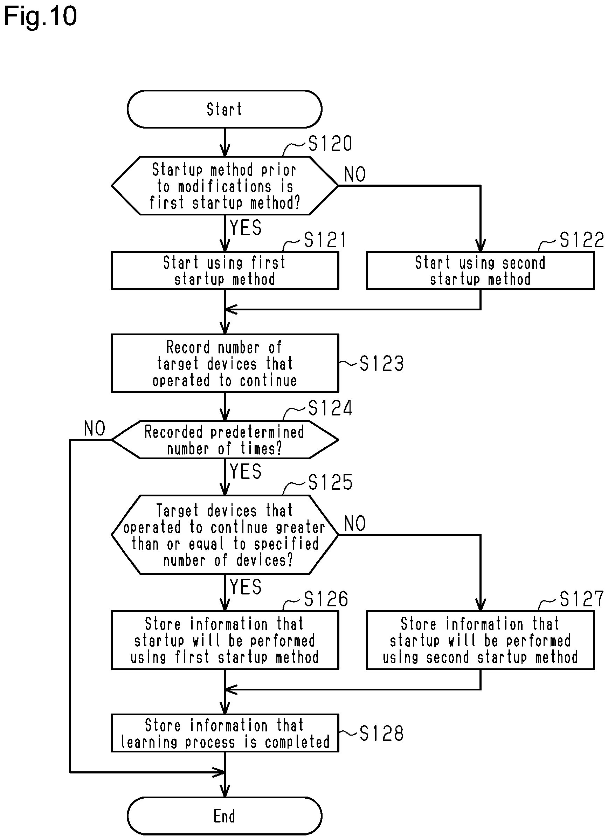

Fig. 10 illustrates the processes executed by the processing device 11 of the management device 10 in the learning process in a third modification. The processing device 11 executes the series of processes shown in Fig. 10, instead of the series of processes shown in Fig. 2.

In the process of step S120, the processing device 11 determines whether the first startup method has been used in the vehicle on-board network system 100 prior to being modified. As will be described later, in the processing device 11 of the third modification, similar to the above-described embodiment, the startup method is selected for each bus network during the learning process and stored in the storage device 12. This allows the processing device 11 to identify the startup method that was used by the processing device 11 in the vehicle on-board network system 100 prior to being modified.

In the process of step S120, when determining that the first startup method has been used in the vehicle on-board network system 100 prior to being modified (step S120: YES), the processing device 11 advances the process to step S121. In the process of step S121, the processing device 11 starts the target device in the bus network using the first startup method. This process is the same as that of step S110 in Fig. 9.

In the process of step S120, when determining that the first startup method has not been used in the vehicle on-board network system 100 prior to being modified (step S120: NO), the processing device 11 advances the process to step S122. In the process of step S122, the processing device 11 starts the target device in the bus network using the second startup method. This process is the same as that of step S100 in Fig. 2.

In the process of step S123, the processing device 11 records the number of target devices that continued to operate. This process is the same as that of step S101 in Fig. 2.

In the process of step S124, the processing device 11 determines whether it has recorded the number of target devices that continued to operate the predetermined number of times. This process is the same as that of step S102 in Fig. 2.

When the processing device 11 determines that it has not recorded the number of target devices that continued to operate the predetermined number of times (step S124: NO), the processing device 11 ends the series of processes.

When the processing device 11 determines that it has recorded the number of target devices that continued to operate the predetermined number of times (step S124: YES), the processing device 11 advances the process to step S125. In the process of the next step S125, the processing device 11 determines whether the number of target devices that continued to operate is greater than or equal to the specified number of devices. This process is the same as that of step S103 in Fig. 2.

When determining that the number of target devices that continued to operate is greater than or equal to the specified number of devices (step S125: YES), the processing device 11 advances the process to step S126. In the process of step S126, regarding the bus network in which the number of target devices that continued to operate is greater than or equal to the specified number of devices, the processing device 11 stores, in the storage device 12, information that the target device connected to that bus network will be started using the first startup method. This process is the same as that of step S104 in Fig. 2.

When determining that the number of target devices that continued to operate is less than the specified number of devices (step S125: NO), the processing device 11 advances the process to step S127. In the process of step S127, regarding the bus network in which the number of target devices that continued to operate is less than the specified number of devices, the processing device 11 stores, in the storage device 12, information that the target device connected to that bus network will be started using the second startup method. This process is the same as that of step S105 in Fig. 2.

After executing the process of step S126 or step S127, the processing device 11 advances the process to step S128. In the process of step S128, the processing device 11 stores, in the storage device 12, information that the learning process is completed. This process is the same as that of step S106 in Fig. 2. After executing the process of step S128, the processing device 11 ends the series of processes.

Subsequent to the modifications made to the vehicle on-board network system 100, the management device 10 starts the target device using the startup method used before the modifications were made to the vehicle on-board network system 100, thereby obtaining information related to the target device that operated during the execution of a function.

Prior to modifications made to the vehicle on-board network system 100, the management device 10 selects a startup method that achieves both a reduction in power consumption and a quick startup. In a case in which modifications have been made to the vehicle on-board network system 100, the optimal startup method that achieves both a reduction in power consumption and a quick startup tends to be the same as that selected by the management device 10 prior to being modified. For example, in a case in which the modifications made to the vehicle on-board network system 100 are minor and do not affect power consumption or startup time, there is no need to change the startup method even if the modifications have been made to the vehicle on-board network system 100. The management device 10 starts the target device using the startup method used prior to modifications made to the vehicle on-board network system 100, in order to obtain information related to the target device that operated during the execution of a predetermined function. This allows the management device 10 to obtain information while using a startup method that is highly likely to achieve both a reduction in power consumption and a quick startup.

In the above-described embodiment, the management device 10 executes the learning process shown in Fig. 2 for all bus networks to which the target devices related to functions to be executed are connected. Instead, among the bus networks to which the target devices related to the functions to be executed are connected, the management device 10 may execute the learning process only for the bus network that has been affected by modifications made to the vehicle on-board network system 100.

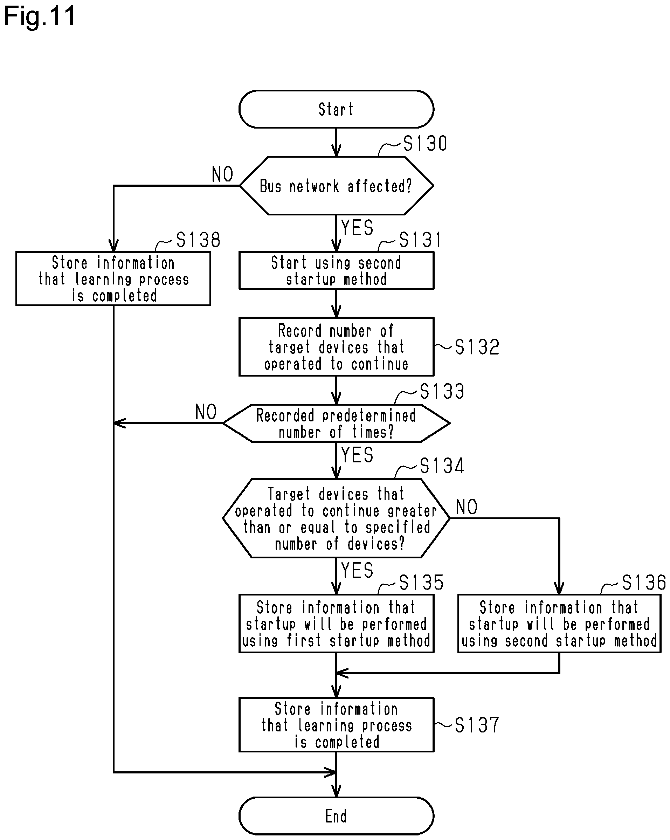

Fig. 11 illustrates the processes executed by the processing device 11 of the management device 10 in the learning process in a fourth modification. The processing device 11 executes the series of processes shown in Fig. 11, instead of the series of processes shown in Fig. 2. In the above-described embodiment, the management device 10 has information indicating which ECU is the target device requiring startup in order to execute a function, and information indicating to which bus network at least one target device to be started is connected. In the fourth modification, the management device 10 obtains information indicating the content of modifications made to the vehicle on-board network system 100. This allows the management device 10, in addition to the aforementioned information, to identify the bus network that has been affected by the modifications made to the vehicle on-board network system 100.

In the process of step S130, the processing device 11 determines whether the bus network executing the learning process has been affected by the modifications made to the vehicle on-board network system 100.

In the process of step S130, when determining that the bus network executing the learning process has been affected by the modifications made to the vehicle on-board network system 100 (step S130: YES), the processing device 11 advances the process to step S131. In the process of step S131, the processing device 11 starts the target device in the bus network using the second startup method. This process is the same as that of step S100 in Fig. 2.

In the process of step S132, the processing device 11 records the number of target devices that continued to operate. This process is the same as that of step S101 in Fig. 2.

In the process of step S133, the processing device 11 determines whether it has recorded the number of target devices that continued to operate the predetermined number of times. This process is the same as that of step S102 in Fig. 2.

When the processing device 11 determines that it has not recorded the number of target devices that continued to operate the predetermined number of times (step S133: NO), the processing device 11 ends the series of processes.

When the processing device 11 determines that it has recorded the number of target devices that continued to operate the predetermined number of times (step S133: YES), the processing device 11 advances the process to step S134. In the process of the next step S134, the processing device 11 determines whether the number of target devices that continued to operate is greater than or equal to the specified number of devices. This process is the same as that of step S103 in Fig. 2.

When determining that the number of target devices that continued to operate is greater than or equal to the specified number of devices (step S134: YES), the processing device 11 advances the process to step S135. In the process of step S135, regarding the bus network in which the number of target devices that continued to operate is greater than or equal to the specified number of devices, the processing device 11 stores, in the storage device 12, information that the target device connected to that bus network will be started using the first startup method. This process is the same as that of step S104 in Fig. 2.

When determining that the number of target devices that continued to operate is less than the specified number of devices (step S134: NO), the processing device 11 advances the process to step S136. In the process of step S136, regarding the bus network in which the number of target devices that continued to operate is less than the specified number of devices, the processing device 11 stores, in the storage device 12, information that the target device connected to that bus network will be started using the second startup method. This process is the same as that of step S105 in Fig. 2.

After executing the process of step S135 or step S136, the processing device 11 advances the process to step S137. In the process of step S137, the processing device 11 stores, in the storage device 12, information that the learning process is completed. This process is the same as that of step S106 in Fig. 2. After executing the process of step S137, the processing device 11 ends the series of processes.

In the process of step S130, when determining that the bus network executing the learning process has not been affected by the modifications made to the vehicle on-board network system 100 (step S130: NO), the processing device 11 advances the process to step S138. In the process of step S138, the processing device 11 stores, in the storage device 12, information that the learning process is completed. This process is the same as that of step S106 in Fig. 2. After executing the process of step S138, the processing device 11 ends the series of processes. This allows the processing device 11 to end the learning process, without learning the startup method again, for the bus network that has not been affected by the modifications made to the vehicle on-board network system 100.

The management device 10 identifies the bus network that has been affected by the modifications made to the vehicle on-board network system 100. For each bus network, the management device 10 is configured to obtain information related to the bus network and determine whether to reselect the startup method. Among the target devices to be started, the management device 10 reselects the startup method only for the bus network affected by the modifications.

In some cases, the management device 10 obtains information related to the target device that continued to operate along with the execution of a function. In such cases, the management device 10 needs to restart the target device required for the execution of the function using a startup method that may not be optimal for achieving a reduction in power consumption and a quick startup. Thus, it is desirable to minimize the number of attempts for the management device 10 to obtain this information again. The management device 10 is configured to determine, for each bus network, whether to reselect the startup method for the bus network in a case in which modifications have been made to the vehicle on-board network system 100. The management device 10 does not reobtain information related to the target devices that operated during the execution of the predetermined function for the bus network that has not been affected by the modifications made to the vehicle on-board network system 100. This allows the management device 10 to reduce the number of times it reobtains information related to the target device that operated during the execution of the predetermined function in a case in which modifications have been made to the vehicle on-board network system 100.

In the above-described embodiment, in a case in which modifications have been made to the vehicle on-board network system 100, the management device 10 executes the learning process for all functions to be executed. However, the management device 10 does not need to execute the learning process for all functions to be executed. For example, for each function to be executed, the management device 10 may obtain information related to the target device that continued to operate along with the execution of the function and determine whether to reselect the startup method.

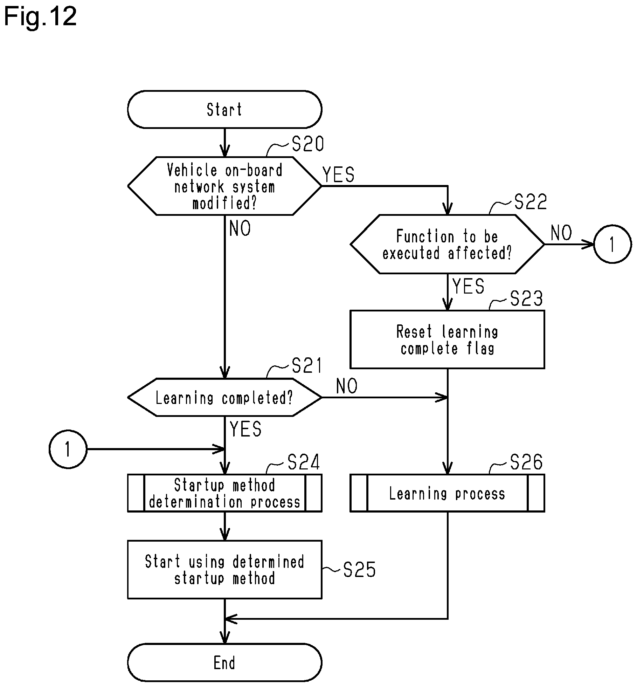

Fig. 12 illustrates the flow of processes related to the startup of the target device executed by the processing device 11 of the management device 10 according to a fifth modification. The processing device 11 executes the series of processes shown in Fig. 12, instead of the series of processes shown in Fig. 3.

In the process of step S20, the processing device 11 determines whether any modifications have been made to the vehicle on-board network system 100. This process is the same as that of step S10 in Fig. 3.

When determining that modifications have been made to the vehicle on-board network system 100 (step S20: YES), the processing device 11 proceeds to step S22. In the process of step S22, the processing device 11 determines whether the function to be executed has been affected by the modifications made to the vehicle on-board network system 100.

In some cases, the ECU connected to the bus network that has been affected by the modifications to the vehicle on-board network system 100 needs to be started as the target device. In such cases, the processing device 11 determines that the function to be executed has been affected by the modifications. In the same manner as the fourth modification, the management device 10 needs to identify the bus network affected by the modifications to the vehicle on-board network system 100.

When the target device affected by the modifications to the vehicle on-board network system 100 needs to be used, the processing device 11 determines that the function to be executed has been affected by the modifications. For example, when an ECU is added to the vehicle on-board network system 100, the processing device 11 refers to information indicating whether the added ECU needs to be started as a target device in order to execute the function. When determining that the added ECU needs to be started as a target device in order to execute the function, the processing device 11 determines that the function has been affected by the modifications. In another example, an ECU on the vehicle on-board network system 100 is removed. In this case, when the ECU is one of the target devices that operated to enable the function, the processing device 11 determines that the function has been affected by the modifications.

When determining that no modifications have been made to the vehicle on-board network system 100 (step S20: NO), the processing device 11 proceeds to step S21. In the process of step S21, the processing device 11 determines whether the learning is completed. This process is the same as that of step S11 in Fig. 3.

When determining that the function to be executed has not been affected by the modifications to the vehicle on-board network system 100 (step S22: NO), the processing device 11 proceeds to step S24.

In the process of step S21, when determining that the learning is completed (step S21: YES), the processing device 11 advances the process to step S24 in the same manner as the above. In step S24, the processing device 11 executes the startup method determination process. This process is the same as that of step S13 in Fig. 3.

In the next step S25, the processing device 11 starts the target device using the startup method determined in the process of step S24. This process is the same as that of step S14 in Fig. 3. After starting the target device, the processing device 11 ends the series of processes.

When determining that the function to be executed has been affected by the modifications to the vehicle on-board network system 100 (step S22: YES), the processing device 11 proceeds to step S23. In the process of step S23, when a process is executed to store information that the learning is completed in the vehicle on-board network system 100 prior to being modified, the processing device 11 resets the learning complete flag from a state in which the learning is completed to a state in which the learning is incomplete. This process is the same as that of step S12 in Fig. 3. After executing the process of step S23, the processing device 11 advances the process to step S26.

In the process of step S21, when determining that the learning is incomplete (step S21: NO), the processing device 11 advances the process to step S26 in the same manner as the above. In the process of step S26, the processing device 11 executes the learning process. This process is the same as that of step S15 in Fig. 3. After executing the learning process, the processing device 11 ends the series of processes.

The management device 10 is configured to determine, for each function to be executed, whether to obtain information related to that function and reselect the startup method in a case in which modifications have been made to the vehicle on-board network system 100.

The management device 10 is configured to determine, for each function to be executed, whether to reobtain information related to that function and reselect the startup method when modifications are made to the vehicle on-board network system 100. This allows the management device 10 to reduce the number of times it reobtains information related to the target device that operated during the execution of the predetermined function in a case in which modifications have been made to the vehicle on-board network system 100.

The vehicle on-board network system 100 includes multiple bus networks connected to the management device 10. In the vehicle on-board network system 100, each bus network includes a power control line used to start the target device using the first startup method. The management device 10 identifies the bus network that has been affected by the modifications to the vehicle on-board network system 100. The management device 10 reselects the startup method for the target device that operates during execution of the function using the target device connected to the bus network affected by the modifications. For the function without using the target device connected to the bus network that has been affected by the modifications in the vehicle on-board network system 100, the management device 10 will not reobtain information. Thus, the management device 10 reobtains information a smaller number of times.

The management device 10 identifies the target device that has been affected by the modifications to the vehicle on-board network system 100. The management device 10 reselects the startup method for the target device that operates during the execution of a function using the target device affected by the modifications. For the function that does not need to start the target device affected by the modifications in the vehicle on-board network system 100, the management device 10 will not reobtain information. Thus, the management device 10 reobtains information a smaller number of times.

In the above-described modification, the management device 10 can also be employed in a vehicle during the design and development stages. In such a case, the developer of the vehicle may determine, for each function, whether the management device 10 should obtain information related to the target device that continued to operate along with the execution of the function and determine whether to reselect the startup method.

In the above-described embodiment, the management device 10 learns the startup method for the target device by storing the startup method selected for each bus network in the learning process. In the startup method determination process of step S13 in Fig. 3, the management device 10 determines the startup method for the target device on each bus network by reading the learned results from the storage device 12. Instead of the configuration in which the management device 10 selects the startup method for each bus network in the learning process, the processing device 11 may select the startup method for each bus network in the startup method determination process each time.

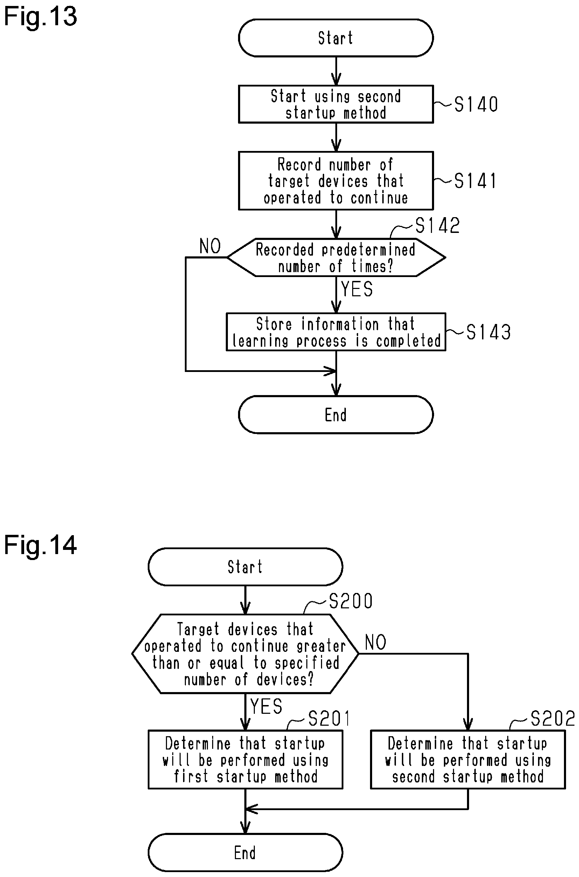

Fig. 13 illustrates the processes executed by the processing device 11 of the management device 10 in the learning process in a sixth modification. The processing device 11 executes the series of processes shown in Fig. 13, instead of the series of processes shown in Fig. 2.

In the process of step S140, the processing device 11 starts the target device in the bus network using the second startup method. This process is the same as that of step S100 in Fig. 2.

In the process of step S141, the processing device 11 records the number of target devices that continued to operate. This process is the same as that of step S101 in Fig. 2.

In the process of step S142, the processing device 11 determines whether it has recorded the number of target devices that continued to operate the predetermined number of times. This process is the same as that of step S102 in Fig. 2.

When the processing device 11 determines that it has not recorded the number of target devices that continued to operate the predetermined number of times (step S142: NO), the processing device 11 ends the series of processes.

When the processing device 11 determines that it has recorded the number of target devices that continued to operate the predetermined number of times (step S142: YES), the processing device 11 advances the process to step S143. In the process of step S143, the processing device 11 stores, in the storage device 12, information that the learning process is completed. This process is the same as that of step S106 in Fig. 2. After executing the process of step S143, the processing device 11 ends the series of processes.

Fig. 14 illustrates the processes executed by the processing device 11 of the management device 10 for each bus network in the startup method determination method in the sixth modification. The processing device 11 executes the processes shown in Fig. 14 during the process executed in step S13 of Fig. 3.

In the process of step S200, the processing device 11 determines whether the number of target devices that continued to operate in the learning process, which has been described with reference to Fig. 13, is greater than or equal to the specified number of devices.

When determining that the number of target devices that continued to operate is greater than or equal to the specified number of devices (step S200: YES), the processing device 11 advances the process to step S201. In the process of step S201, the processing device 11 determines to start the target device connected to the bus network using the first startup method. After executing the process of step S201, the processing device 11 ends the series of processes.

When determining that the number of target devices that continued to operate is less than the specified number of devices (step S200: NO), the processing device 11 advances the process to step S202. In the process of step S202, the processing device 11 determines to start the target device connected to the bus network using the second startup method. After executing the process of step S202, the processing device 11 ends the series of processes.

Thus, even if the startup method is selected in the startup method determination process each time, the management device 10 can select the startup method based on information obtained through the learning process to start the target device using the selected startup method.

Various modifications in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A management device (10) for a vehicle on-board network system (100), the management device (10) comprising processing circuitry (11) configured to:
obtain, subsequent to modifications made to the vehicle on-board network system (100), information related to a target device (21-33) that operated during execution of a predetermined function in the vehicle on-board network system (100), the target device (21-33) being one of devices (21-33) that are connected to the vehicle on-board network system (100);
based on the obtained information, select a startup method for the target device (21-33) from:
a first startup method for starting the target device (21-33) through power control that controls whether to supply power to the target device (21-33); and
a second startup method for starting the target device (21-33) by communicating with the target device (21-33) to request startup for the target device (21-33); and
start the target device (21-33) using the selected startup method.

2. The management device (10) according to claim 1, wherein
the processing circuitry (11) is configured to:
after selecting the startup method for the target device (21-33) based on the obtained information, store the selected startup method to learn the startup method for the target device (21-33); and
start the target device (21-33) using the learned startup method.

3. The management device (10) according to claim 1 or 2, wherein
the processing circuitry (11) is configured to obtain, subsequent to the modifications made to the vehicle on-board network system (100), the information by starting the target device (21-33) using the first startup method.

4. The management device (10) according to claim 1 or 2, wherein
the processing circuitry (11) is configured to obtain, subsequent to the modifications made to the vehicle on-board network system (100), the information by starting the target device (21-33) using the second startup method.

5. The management device (10) according to claim 1 or 2, wherein
the processing circuitry (11) is configured to obtain, subsequent to the modifications made to the vehicle on-board network system (100), the information by starting the target device (21-33) using the startup method used prior to the modifications made to the vehicle on-board network system (100).

6. The management device (10) according to any one of claims 1 to 5, wherein
the processing circuitry (11) is configured to obtain, as the information, data related to the number of target devices (21-33) that operated along with the execution of the predetermined function.

7. The management device (10) according to claim 6, wherein
the processing circuitry (11) is configured to:
when the number of the target devices (21-33) that operated along with the execution of the predetermined function is greater than or equal to a specified number of devices, select the first startup method; and
when the number of the target devices (21-33) that operated along with the execution of the predetermined function is less than the specified number of devices, select the second startup method.

8. The management device (10) according to any one of claims 1 to 7, wherein
the vehicle on-board network system (100) includes bus networks (61, 62, 63) that are connected to the management device (10),
each of the bus networks (61, 62, 63) includes a power control line (51, 52, 53) that starts the target device (21-33) using the first startup method, and
the processing circuitry (11) is configured to obtain the information for each of the bus networks (61, 62, 63) and select the startup method for each of the bus networks (61, 62, 63).

9. The management device (10) according to claim 8, wherein
in a case in which the modifications have been made to the vehicle on-board network system (100), the processing circuitry (11) is configured to:
identify one of the bus networks (61, 62, 63) that has been affected by the modifications; and
for only the bus network (61, 62, 63) that has been affected by the modifications, reselect the startup method.

10. The management device (10) according to any one of claims 1 to 9, wherein
in a case in which the modifications have been made to the vehicle on-board network system (100), the processing circuitry (11) is configured to:
for a function that is to be executed, obtain the information corresponding to the function and determine whether to reselect the startup method.

11. The management device (10) according to claim 10, wherein
the vehicle on-board network system (100) includes bus networks (61, 62, 63) that are connected to the management device (10),
each of the bus networks (61, 62, 63) includes a power control line (51, 52, 53) that starts the target device (21-33) using the first startup method, and
in a case in which the modifications have been made to the vehicle on-board network system (100), the processing circuitry (11) is configured to:
identify one of the bus networks (61, 62, 63) that has been affected by the modifications; and
reselect the startup method for another target device (21-33) that operates during execution of the function using the target device (21-33) connected to the bus network (61, 62, 63) that has been affected by the modifications.

12. The management device (10) according to claim 10, wherein
in a case in which the modifications have been made to the vehicle on-board network system (100), the processing circuitry (11) is configured to:
identify a target device (21-33) that has been affected by the modifications; and
reselect the startup method for another target device (21-33) that operates during execution of the function using the target device (21-33) that has been affected by the modifications.

13. The management device (10) according to any one of claims 1 to 12, wherein
the modifications made to the vehicle on-board network system (100) include at least one of an increase or decrease in the number of the devices (21-33) connected to the vehicle on-board network system (100), a software update in a vehicle that includes the vehicle on-board network system (100), and rearrangement of the devices (21-33) connected to the vehicle on-board network system (100).

14. A control program in a vehicle on-board network system (100) that includes a management device (10) including processing circuitry (11), the control program causing the processing circuitry (11) to execute:
obtaining, subsequent to modifications made to the vehicle on-board network system (100), information related to a target device (21-33) that operated during execution of a predetermined function in the vehicle on-board network system (100), the target device (21-33) being one of devices (21-3) that are connected to the vehicle on-board network system (100);
based on the obtained information, selecting a startup method for the target device (21-33) from:
a first startup method for starting the target device (21-33) through power control that controls whether to supply power to the target device (21-33); and
a second startup method for starting the target device (21-33) by communicating with the target device (21-33) to request startup for the target device (21-33); and
starting the target device (21-33) using the selected startup method.

15. A control method for controlling a vehicle on-board network system (100) that includes a management device (10), the control method comprising:
obtaining, subsequent to modifications made to the vehicle on-board network system (100), information related to a target device (21-33) that operated during execution of a predetermined function in the vehicle on-board network system (100), the target device (21-33) being one of devices (21-33) that are connected to the vehicle on-board network system (100);
based on the obtained information, selecting a startup method for the target device (21-33) from:
a first startup method for starting the target device (21-33) through power control that controls whether to supply power to the target device (21-33); and
a second startup method for starting the target device (21-33) by communicating with the target device (21-33) to request startup for the target device (21-33); and
starting the target device (21-33) using the selected startup method.
